# EUROPEAN PATENT APPLICATION

(11) **EP 4 296 335 A1**
(43) Date of publication of application: **27.12.2023**
(21) Application number: 22883968.4
(22) Date of filing: 18.10.2022
(51) Int. Cl.: C09K 21/12, C08K 5/5313, C08L 67/02, C08J 5/18, D01F 6/62

(54) **PHOSPHORUS-BASED FLAME RETARDANT AND THERMOPLASTIC RESIN COMPOSITION INCLUDING SAME**

(30) Priority: 18.10.2021 KR 20210138496; 17.10.2022 KR 20220133543
(71) Applicant: LG CHEM, LTD., Yeongdeungpo-gu, Seoul 07336 (KR)
(72) Inventor: IM, Seoyoung, Daejeon 34122 (KR); JANG, Hanbit, Daejeon 34122 (KR); LEE, Hoyong, Daejeon 34122 (KR)
(74) Representative: Goddar, Heinz J.
(86) International application number: PCT/KR2022/015842
(87) International publication number: WO 2023/068745

(57) **Abstract**

The present invention relates to a novel phosphorus (P)-based flame retardant, a thermoplastic resin composition including the phosphorus (P)-based flame retardant, and a molded product. In the present invention, the phosphorus-based flame retardant is used to remarkably improve mechanical properties such as tensile strength, impact strength, etc. while exhibiting excellent flame retardancy even if the amount of use is reduced compared to conventional flame retardants.

## Description

### TECHNICAL FIELD

The present invention relates to a novel phosphorus (P)-based flame retardant and to a thermoplastic resin composition capable of providing improved mechanical properties, while exhibiting excellent flame retardancy by including the phosphorus-based flame retardant, even if an amount used is reduced compared to conventional flame retardants.

### DISCUSSION OF RELATED ART

Thermoplastic polyester resins are excellent in terms of chemical resistance, mechanical strength, heat resistance and electrical properties, and are thus widely used in housings and connectors of electronic, electrical and automotive parts. Since such polyester resins generally have a flammable property, it was used with a halogen-based flame retardant or an antimony-based flame-retardant auxiliary agent to be applied to a field requiring flame retardancy. However, the halogen-based flame retardant or the antimony-based flame-retardant auxiliary agent not only generates a large amount of toxic halogen gas in case of fire, but also has a problem in that an excessive amount of the flame retardant should be used in order to exhibit desired flame retarding effects.

In order to solve the above problems, a method of imparting flame retardancy to a polyester resin using a non-halogen flame retardant such as an organic phosphinate metal salt flame retardant, an organo phosphinic acid metal salt flame retardant, and a melamine polyphosphate has been proposed. However, when the flame retardancy is imparted by using the above-described compounds, there was a problem that the physical properties of a final resin may be excessively degraded since an excessive amount of a flame retardant was used.

### RELATED ART

Korean Patent No. 10-2285778

### DESCRIPTION OF THE INVENTION

### TECHNICAL OBJECTIVE

Embodiments of the present invention are directed to an environmentally friendly phosphorus (P)-based flame retardant which may realize excellent flame retardancy even if an amount used is reduced compared to a conventional flame retardant.

Embodiments of the present invention are also directed to a thermoplastic resin composition including the above-described phosphorus-based flame retardant and a molded article using the thermoplastic resin composition.

Other objectives and advantages of the present invention may be more clearly explained by the following detailed description and claims.

### TECHNICAL MEANS

According to an embodiment, a phosphorus-based flame retardant is represented by the following Chemical Formula 1:

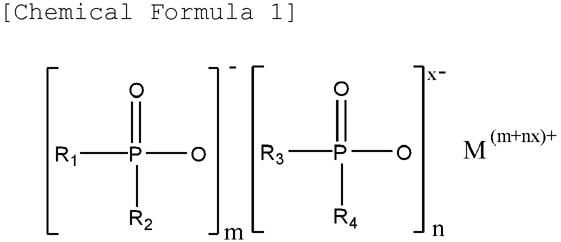

wherein in Chemical Formula 1,
R₁ to R₃ are the same as or different from each other, and are each independently selected from hydrogen, a hydroxyl group, a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₄ is selected from a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
the C₁ to C₄₀ alkyl group, the C₂ to C₄₀ alkenyl group, the C₃ to C₄₀ cycloalkyl group, the heterocycloalkyl group having 3 to 40 nuclear atoms, the C₆ to C₆₀ aryl group, or the heteroaryl group having 5 to 60 nuclear atoms of R₄ includes at least one substituent capable of forming coordination bonding with the following M,
M is a metal selected from Group 1, Group 2, Group 3 and transition metals, or a protonated nitrogen base,
m, n and x are each an integer in a range from 1 to 5, and
the C₁ to C₄₀ alkyl group, the C₂ to C₄₀ alkenyl group, the C₃ to C₄₀ cycloalkyl group, the heterocycloalkyl group having 3 to 40 nuclear atoms, the C₆ to C₆₀ aryl group and the heteroaryl group having 5 to 60 nuclear atoms of R₁ to R₄ are each independently unsubstituted or substituted with one or more substituents selected from deuterium (D), halogen, a cyano group, a nitro group, a hydroxyl group, an amine group, a carboxyl group, a C₁ to C₄₀ alkyl group, a C₆ to C₆₀ aryl group, and a heteroaryl group having 5 to 60 nuclear atoms, and when the substituents are plural in number, the substituents are the same as or different from each other.

According to an embodiment, a phosphorus-based flame retardant is represented by the following Chemical Formula 2: 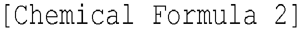 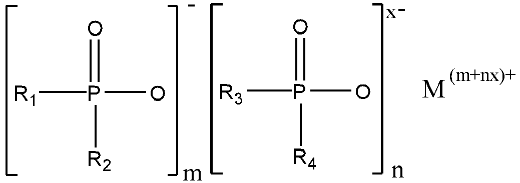 wherein in Chemical Formula 2,
R₁ to R₃ are the same as or different from each other, and are each independently selected from hydrogen, a hydroxyl group, a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₄ is selected from a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₃ and R₄ are bonded with each other to form a monocyclic or polycyclic condensed or fused ring,
M is a metal selected from Group 1, Group 2, Group 3 and transition metals, or a protonated nitrogen base,
m, n and x are each an integer in a range from 1 to 5, and
the C₁ to C₄₀ alkyl group, the C₂ to C₄₀ alkenyl group, the C₃ to C₄₀ cycloalkyl group, the heterocycloalkyl group having 3 to 40 nuclear atoms, the C₆ to C₆₀ aryl group and the heteroaryl group having 5 to 60 nuclear atoms of R₁ to R₄ are each independently unsubstituted or substituted with one or more substituents selected from deuterium (D), halogen, a cyano group, a nitro group, a hydroxyl group, an amine group, a carboxyl group, a C₁ to C₄₀ alkyl group, a C₆ to C₆₀ aryl group, and a heteroaryl group having 5 to 60 nuclear atoms, and when the substituents are plural in number, the substituents are the same as or different from each other.

According to an embodiment, a thermoplastic resin composition includes a thermoplastic resin; and one or more phosphorus-based flame retardants selected from the phosphorus-based flame retardant represented by Chemical Formula 1 and the phosphorus-based flame retardant represented by Chemical Formula 2.

In some embodiments, the phosphorus-based flame retardant may be included in an amount in a range from 0.1 to 50 parts by weight with respect to 100 parts by weight of the thermoplastic resin composition.

In some embodiments, the thermoplastic resin composition may include at least one of a polyester resin or a polyamide resin.

In some embodiments, the thermoplastic resin may be polybutylene terephthalate (PBT).

According to an embodiment, a molded article is formed from the thermoplastic resin composition.

### EFFECTS OF THE INVENTION

The novel phosphorus (P)-based flame retardant according to one or more embodiments of the present invention may be used as a flame retardant or a flame retardant additive of a thermoplastic resin composition, may exhibit flame retardancy equivalent to or more excellent than a conventional phosphorus-based flame retardant even if an amount used is reduced, and may be significantly improved in terms of mechanical properties such as tensile strength and impact strength.

The effect according to the present invention is not limited by the descriptions exemplified above, and more various effects are included in the present specification.

### DETAILED DESCRIPTION

Hereinafter, the present disclosure will be described in detail.

All terms (including technical and scientific terms) used herein may be used in the meaning commonly understood by those of ordinary skill in the art to which the present invention pertains, unless otherwise defined. In addition, terms defined in a commonly used dictionary are not to be interpreted ideally or excessively unless clearly defined in particular.

Throughout this specification, when a part "includes" a certain element, it is an open-ended term that includes the possibility of further including other elements rather than excluding other elements, unless otherwise stated.

As used herein, "preferred" and "preferably" refer to embodiments of the invention that may provide certain advantages under certain circumstances. However, other embodiments may also be preferred, under the same or other circumstances. Furthermore, the recitation of one or more preferred examples does not imply that other embodiments are not useful, nor is it intended to exclude other embodiments from the scope of the invention.

### <Phosphorus-based flame retardant>

An example of the present invention is a compound represented by Chemical Formula 1 or 2 described above, which may be added to a thermoplastic resin composition to be used as a flame retardant or a flame retardant additive (auxiliary agent).

Specifically, the compound represented by Chemical Formula 1 may be a compound including at least one substituent capable of coordinate bonding with M, and the compound represented by Chemical Formula 2 may be a compound including a common hydrocarbon-based condensed or fused ring formed by R₃ and R₄ bonded with each other.

For a specific example of the compound represented by Chemical Formula 1 or 2, R₁ to R₃ may be the same as or different from each other, and may each independently be one or more selected from a hydroxyl group, a C₁ to C₁₀ alkyl group, a C₂ to C₁₀ alkenyl group, a C₆ to C₂₀ aryl group, and a heteroaryl group having 5 to 20 nuclear atoms. More specifically, R₁ to R₃ may each independently be selected from a hydroxyl group, a C₁ to C₁₀ alkyl group, and a C₆ to C₂₀ aryl group.

R₄ may have two embodiments depending on whether or not a condensed or fused ring with R₃ is formed.

In a specific example, in Chemical Formula 1 that does not form a condensed or fused ring, R₄ may be one or more selected from a C₁ to C₁₀ alkyl group, a C₂ to C₁₀ alkenyl group, and a C₆ to C₂₀ aryl group, where the alkyl group, the alkenyl group, and/or the aryl group of R₄ may each include at least one or more substituents capable of coordinate bonding with the following M.

In such a case, as the substituent capable of coordinate bonding with M, a common substituent having a lone pair of electrons that does not participate in bonding may be used without limitation. For example, the substituent capable of coordinate bonding with M may be selected from a hydroxyl group (-OH), a carboxyl group (-COOH), and an amine group (-NR₁₁R₁₂). More specifically, R₄ that does not form the condensed ring may be selected from a C₁ to C₁₀ alkyl group and a C₆ to C₂₀ aryl group substituted with one or more coordinate-bondable substituents.

In another specific example, in the compound of Chemical Formula 2 that forms a condensed or fused ring, R₄ is not particularly limited in terms of the type and number of carbon atoms of the substituent, the form of the condensed ring, and the like, as long as it may be bonded with the aforementioned R3 to form a common monocyclic or polycyclic condensed ring known in the art. For example, it may be the same as or different from defined for R₄ in Chemical Formula 1 described above.

M may be selected from Al, Mg, Ca, Sb, Sn, Ge, Ti, Zn, Fe, Ni, Zr, Ce, Bi, Sr, Mn, Li, Na, and K, or may be an ammonium ion.

In addition, m, n, and x may each be an integer in a range from 1 to 5.

According to the present invention, the compound represented by Chemical Formula 1 or 2 may be a salt including at least two or more heterogeneous phosphoric acid-based moieties having different structures and functions. When the compound represented by Chemical Formula 1 or 2 is used as a flame retardant or flame retardant additive for a thermoplastic resin, it may exhibit flame retardancy equivalent to or more excellent than the conventional phosphoric acid-based flame retardant including one phosphoric acid-based moiety or the same phosphoric acid-based moieties, even if a small amount is used than an amount of the conventional phosphoric acid-based flame retardant, and may be significantly improved in terms of mechanical properties. In addition, since the thermoplastic resin may be further used as much as the reduced amount of the flame retardant used, the physical stability and mechanical properties of a final thermoplastic resin may be improved by improving the degree of polymerization.

For example, the compound represented by Chemical Formula 1 may be more specified into any one of the following Chemical Formulas 1a to 1f according to the type of the substituent capable of coordinate bonding introduced to R₄ and/or the type of the substituent of R₃.

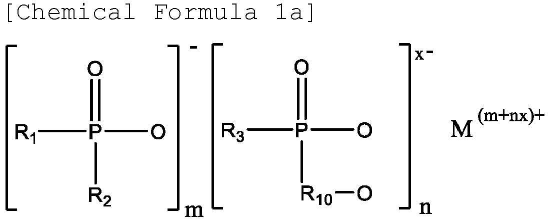

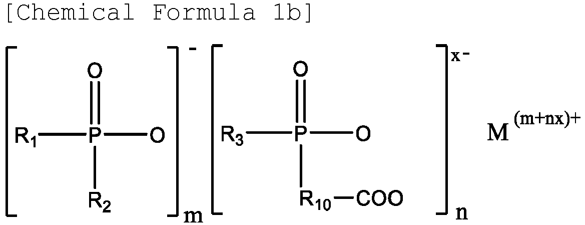

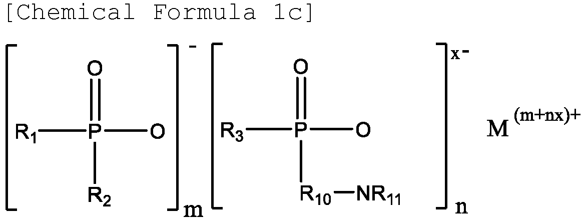

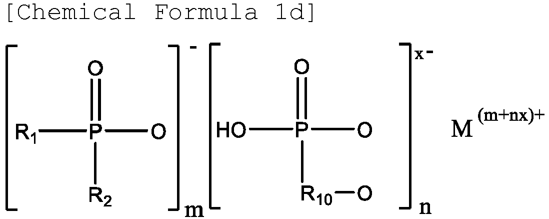

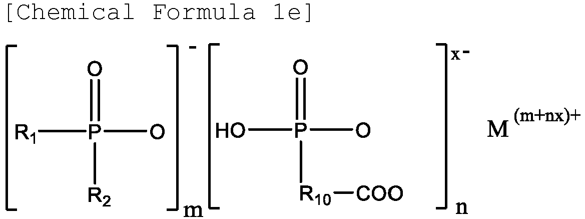

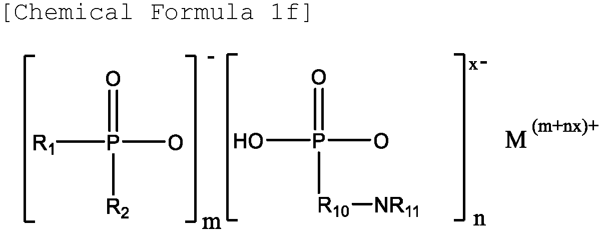

In Chemical Formulas 1a to 1f,
R₁₀ may be selected from a C₁ to C₄₀ alkyl group and a C₆ to C₆₀ aryl group,
R₁₁ may be selected from hydrogen, a C₁ to C₄₀ alkyl group, and a C₆ to C₆₀ aryl group, and
R₁, R₂, R₃, M, m, n, and x may each be the same as defined in Chemical Formula 1.

The compounds represented by Chemical Formulas 1a to 1f described above may be more specified into any one of Chemical Formulas 3a to 31 exemplified below according to the form of a coordinate bond with M. However, it is not limited by those exemplified below.

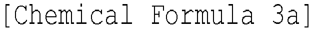

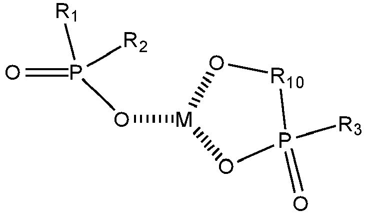

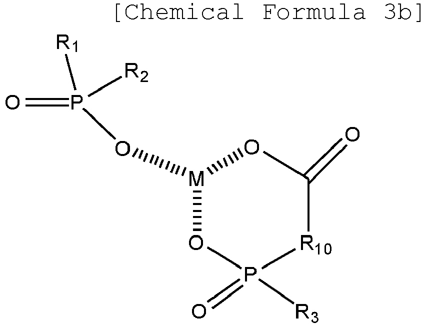

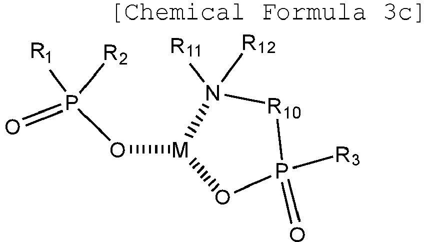

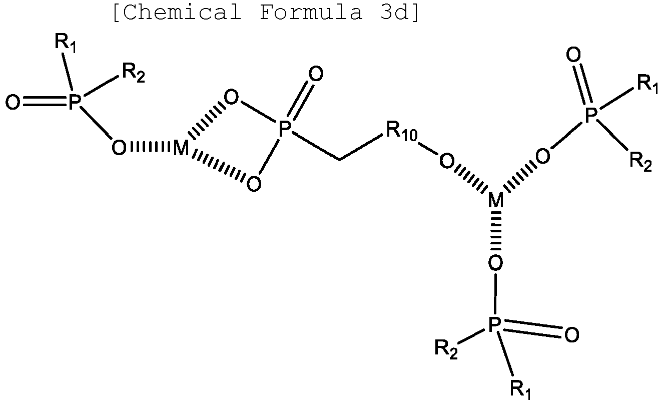

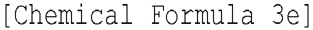

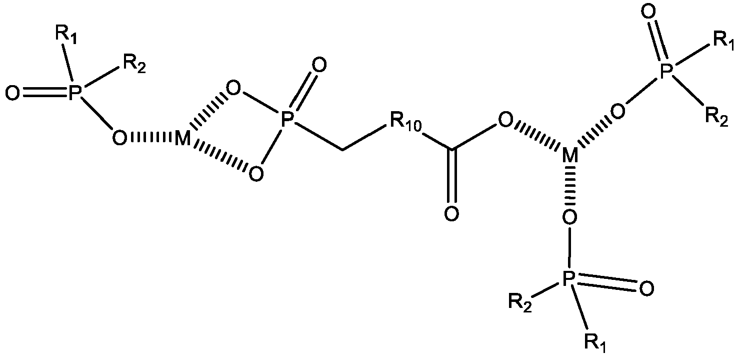

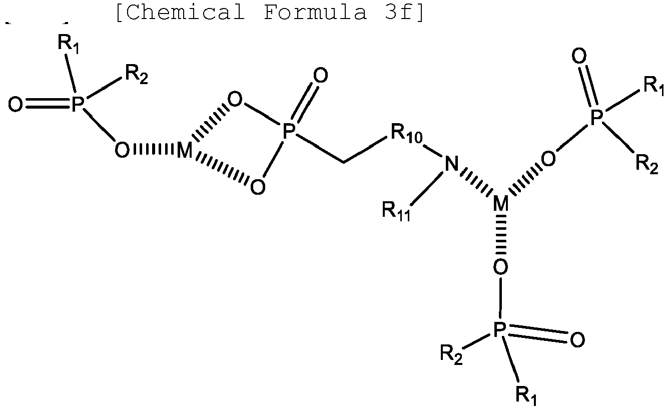

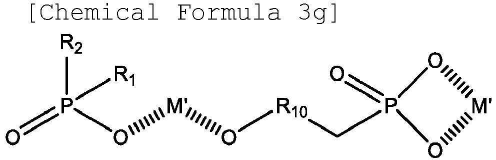

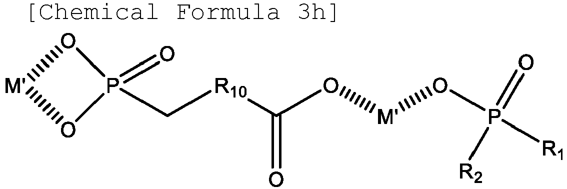

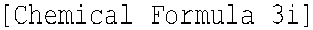

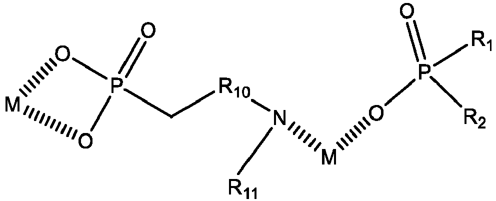

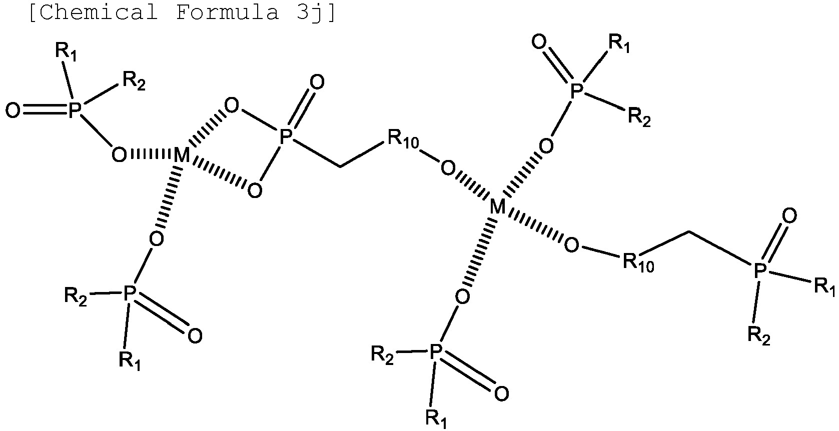

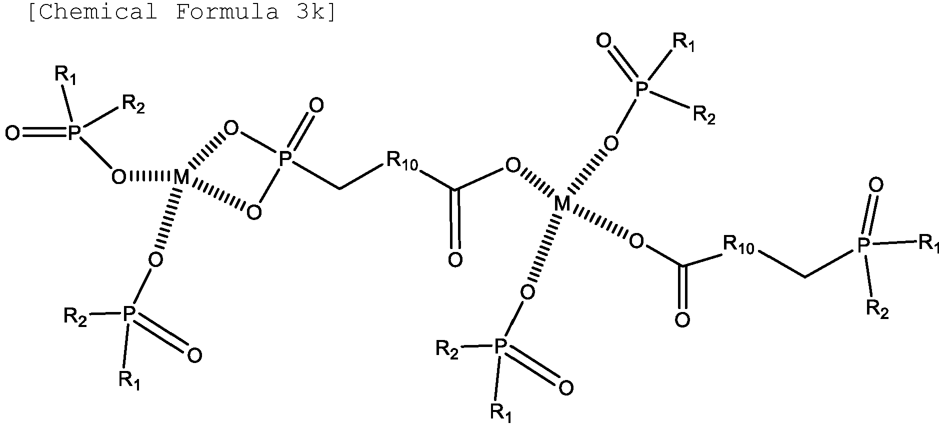

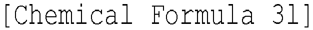

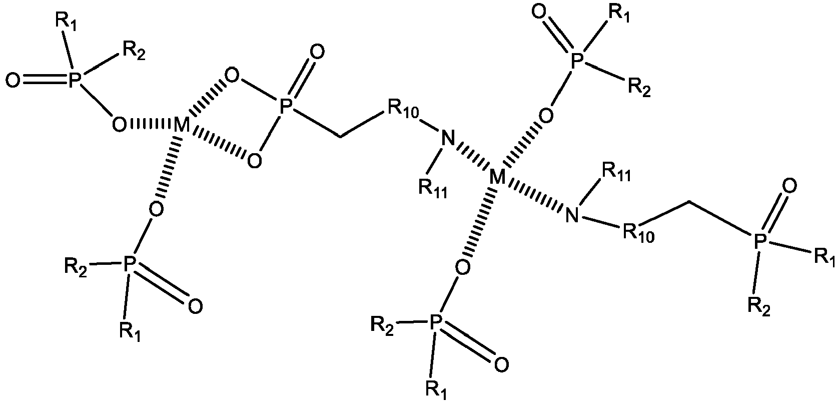

In Chemical Formulas 3a to 3l,
M, R₁ to R₃, and R₁₀ to R₁₂ may each be the same as defined in Chemical Formula 1 above.

For example, the compounds represented by Formulas 3a to 3f exemplify forms in which the metal (M) is +3, and the compounds represented by Formulas 3g to 3i are exemplify forms in which the metal (M) is +2, and the compounds represented by Chemical Formulas 3k to 3l exemplify the form in which the metal (M) is +4. However, it is not limited by those above, and is not particularly limited to the type of metal, bonding position, or chemical structure, as long as it can satisfy the charge balance of the metal to be coordinated. It is also within the scope of the present invention to include possible common metals capable of forming coordination bond.

In another embodiment, the compound represented by Chemical Formula 2 may be more specified into the following Chemical Formula 2a or 2b according to the type of a condensed ring or fused ring formed by a bond between R₃ and R₄.

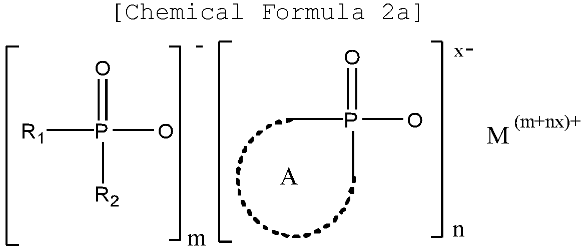

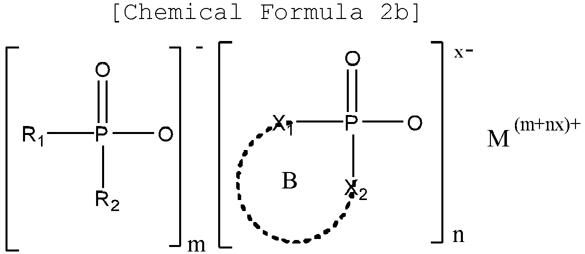

In Chemical Formula 2a or 2b,
rings A and B may each be a hydrocarbon-based ring including one or more common heteroatoms (e.g., P) known in the art, which may be condensed, fused, bridged or spiro-bonded with other adjacent rings.

In one example, rings A and B may be a monocyclic or polycyclic, heteroalicyclic or a monocyclic or polycyclic heteroaromatic ring, and may specifically be a heteroalicyclic ring having 3 to 10 nuclear atoms or a heteroaromatic ring having 5 to 10 nuclear atoms. In such a case, the heteroatom may include phosphorus (P), and may further include at least one or more common heteroatoms (e.g., X₁, X₂) known in the art.

X₁ and X₂ may be the same as or different from each other, and may each independently be CR₂₁R₂₂ or NR₂₃, where at least one of X₁ and X₂ may be N. In such a case, when ring B is a heteroaromatic ring, any one of R₂₁ and R₂₂ may be unbonded.

R₂₁ to R₂₃ may be the same as or different from each other, and may each independently be selected from hydrogen, a C₁ to C₄₀ alkyl group and a C₆ to C₆₀ aryl group, and specifically from hydrogen and a C₁ to C₁₀ alkyl group.

Ring A, ring B, the alkyl group and the aryl group of R₂₁ to R₂₃ may each independently be unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and

R₁, R₂, M, m, n, and x may be the same as defined in Chemical Formula 2.

The compound represented by Chemical Formula 2a or 2b described above may be more specified into Chemical Formula 4a to 4d exemplified below depending on the form of a coordinate bond with M. However, it is not limited by those exemplified below.

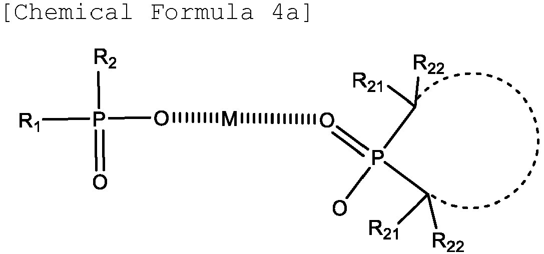

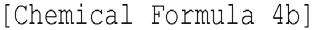

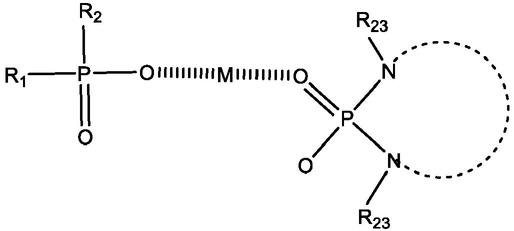

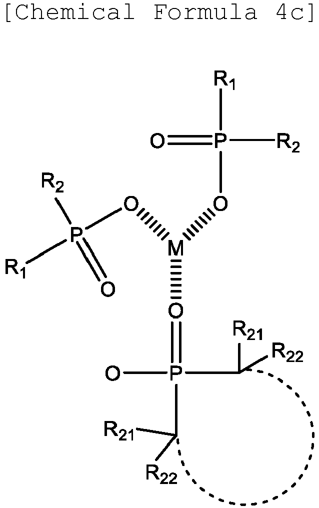

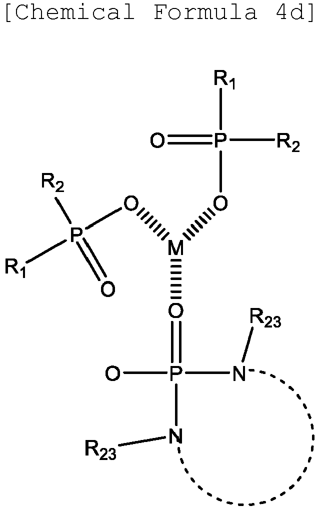

In Chemical Formula 4a to 4d,
M, ring A, ring B, X₁ and X₂, and R₁ and R₂ may each be the same as defined in Chemical Formula 2 above.

For example, the compounds represented by Formulas 4a or 4b exemplify forms in which the metal (M) is +2, and the compounds represented by Formulas 4c or 4d are exemplify forms in which the metal (M) is +3. However, it is not limited by those above, and is not particularly limited to the type of metal, bonding position, or chemical structure, as long as it can satisfy the charge balance of the metal to be coordinated. It is also within the scope of the present invention to include possible common metals capable of forming coordination bond.

The phosphorus-based flame retardant compound represented by Chemical Formula 1 or 2 of the present invention described above may be more specified into compounds exemplified below. However, the compound represented by Chemical Formula 1 or 2 of the present invention is not limited by those exemplified below.

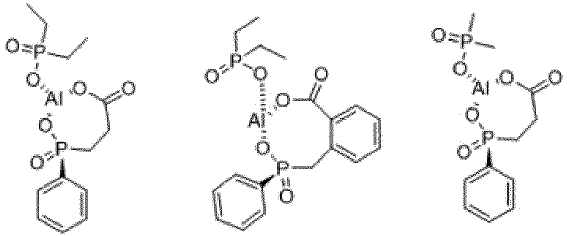

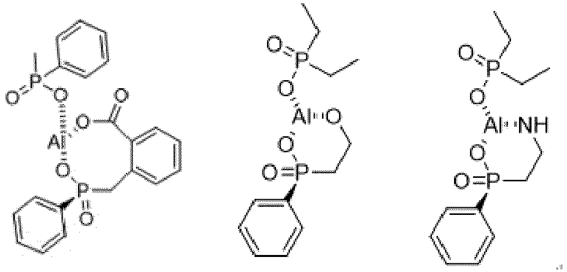

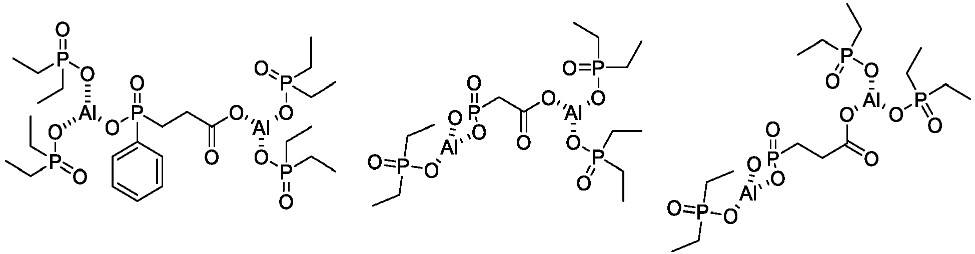

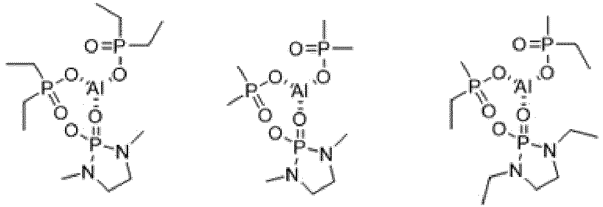

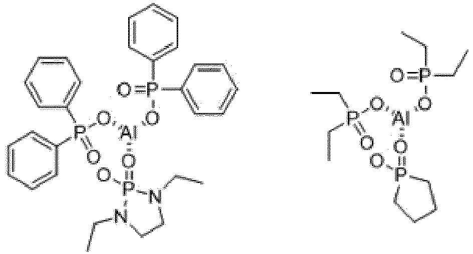

As used herein, "alkyl" may refer to a monovalent substituent derived from a linear or branched chain saturated hydrocarbon having 1 to 40 carbon atoms. Examples of such alkyl may include, but are not limited to, methyl, ethyl, propyl, isobutyl, sec-butyl, pentyl, iso-amyl, hexyl or the like.

As used herein, "alkenyl" may refer to a monovalent substituent derived from a linear or branched chain unsaturated hydrocarbon having 2 to 40 carbon atoms, having at least one carbon-carbon double bond. Examples of such alkenyl may include, but are not limited to, vinyl, allyl, isopropenyl, 2-butenyl or the like.

As used herein, "alkynyl" may refer to a monovalent substituent derived from a linear or branched chain unsaturated hydrocarbon having 2 to 40 carbon atoms, having at least one carbon-carbon triple bond. Examples of such alkynyl may include, but are not limited to, ethynyl, 2-propynyl or the like.

As used herein, "aryl" may refer to a monovalent substituent derived from an aromatic hydrocarbon having 6 to 60 carbon atoms which is in a structure with a single ring or two or more rings combined with each other. In addition, a form in which two or more rings are pendant (e.g., simply attached) to or fused with each other may also be included. Examples of such aryl may include, but are not limited to, phenyl, naphthyl, phenanthryl, anthryl or the like.

As used herein, "heteroaryl" may refer to a monovalent substituent derived from a monoheterocyclic or polyheterocyclic aromatic hydrocarbon having 5 to 40 nuclear atoms. In such a case, one or more carbons in the ring, preferably one to three carbons, are substituted with a heteroatom such as N, O, S or Se. In addition, a form in which two or more rings are pendant to or fused with each other may be included and a form fused with an aryl group may be included. Examples of such heteroaryl may include, but are not limited to, a 6-membered monocyclic ring including, for example, pyridyl, pyrazinyl, pyrimidinyl, pyridazinyl and triazinyl; a polycyclic ring including, for example, phenoxathienyl, indolinzinyl, indolyl, purinyl, quinolyl, benzothiazole, and carbazolyl; 2-furanyl; N-imidazolyl; 2-isoxazolyl; 2-pyridinyl; 2-pyrimidinyl or the like.

As used herein, "cycloalkyl" may refer to a monovalent substituent derived from a monocyclic or polycyclic non-aromatic hydrocarbon having 3 to 40 carbon atoms. Examples of such cycloalkyl may include, but are not limited to, cyclopropyl, cyclopentyl, cyclohexyl, norbornyl, adamantine or the like.

As used herein, "heterocycloalkyl" may refer to a monovalent substituent derived from a non-aromatic hydrocarbon having 3 to 40 nuclear atoms, where one or more carbons in the ring, preferably one to three carbons, are substituted with a heteroatom such as N, O, S or Se. Examples of such heterocycloalkyl may include, but are not limited to, morpholine, piperazine or the like.

### Thermoplastic resin composition

Another example of the present invention is a thermoplastic resin composition including the above-described phosphorus (P)-based flame retardant and a thermoplastic resin.

In such a case, since the phosphorus (P)-based flame retardant is the same as that described above, the description thereof will be omitted.

In the thermoplastic resin composition according to the present invention, a content of the phosphorus-based flame retardant is not particularly limited, and may be appropriately adjusted within a conventional content range known in the art. For example, the phosphorus-based flame retardant may be used in an amount in a range from 0.1 to 50 parts by weight, specifically in a range from 1 to 40 parts by weight, and more specifically in a range from 3 to 30 parts by weight, with respect to 100 parts by weight of the thermoplastic resin composition. When it has the above content range, it is possible to improve the flame retardant properties of the thermoplastic resin, such as polyester resins, polyamide resins, and the like. In particular, unlike the conventional flame retardant in which mechanical properties of the final thermoplastic resin product are necessarily degraded, the thermoplastic resin product including the phosphorus-based flame retardant according to the present invention may maintain mechanical properties, while exhibiting excellent flame retardant effect.

In the present invention, common thermoplastic resins known in the art may be used without limitation.

Non-limiting examples of the applicable thermoplastic resin may include: a resin alone selected from: polyester resin, polyamide (PA)-based resin, polystyrene (PS) resin, acrylonitrile-butadiene-styrene (ABS) copolymer resin, rubber-modified high-impact polystyrene (HIPS) resin, acrylonitrile-styrene (SAN) copolymer resin, polycarbonate (PC) resin, polyethylene (PE) resin, polypropylene (PP) resin, polyethylene terephthalate (PET), polybutylene terephthalate (PBT), polymethyl methacrylate (PMMA), and polyamide (PA)-based resin, or a copolymer of the resins, an alloy of the resins, and the like. Specifically, the thermoplastic resin may use at least one of a polyester resin and a polyamide (PA)-based resin and may preferably be polybutylene terephthalate (PBT) .

A content of the thermoplastic resin is not particularly limited, and may be appropriately adjusted within a conventional content range known in the art. In the present invention, the thermoplastic resin may be of a remaining amount to match 100 parts by weight of the thermoplastic resin composition excluding the phosphorus-based flame retardant described above. For example, the thermoplastic resin may be used in an amount in a range from 10 to 85 parts by weight, specifically in a range from 10 to 70 parts by weight, and more specifically in a range from 10 to 60 parts by weight, with respect to 100 parts by weight of the thermoplastic resin composition. When it has the above-described content range, excellent physical properties of the thermoplastic resin itself may be exhibited.

The thermoplastic resin composition according to the present invention may further include a common resin known in the art other than the aforementioned thermoplastic resin. For example, polyolefin resins, vinyl-based resins, (meth)acrylic resins, imide-based resins, polystyrene-based resins, thermosetting resins such as epoxy resins, cellulose resins, polyetheretherketone resins, fluororesins, polycarbonate resins, and the like may be included.

In addition, in the present invention, within the range that does not impair the effect of the invention, an additive suitable for the intended use or effect may be further included. Examples of applicable additives may include, but not limited to, one or more selected from: fillers, colorants, pigments, dyes, dispersants, plasticizers, antioxidants, curing agents, flame retardants, flame retardant auxiliary agents, heat stabilizers, light stabilizers, ultraviolet absorbers, antistatic agents, leveling agents, surfactants, lubricants, release agents, nucleating agents, antifrictions, compatibilizers, char formers, impact modifiers, anti-drip agents, and chain extenders. A content of the additive is not particularly limited and may be appropriately adjusted within a conventional content range known in the art, for example, in a range from 0.1 to 20 parts by weight with respect to 100 parts by weight of the thermoplastic resin composition.

The thermoplastic resin composition according to the present invention may be prepared according to a conventional method known in the art, for example, after appropriately mixing the thermoplastic resin, the phosphorus-based flame retardant, other resins or additives, and the like, the mixture may be melt-kneaded using Banbury mixer, kneader, uniaxial or double-axial extruder and the like. In addition, the composition may be melt-extruded according to a conventional method to prepare pellets and the pellets may be used to mold various products.

### Molded article

Another example of the present invention is a molded article including the thermoplastic resin composition described above.

A shape of the molded article may be appropriately changed according to the usage, and may be, for example, a film shape, a plate shape, a fibrous shape, and the like. However, the present invention is not particularly limited thereto. Specific examples of the molded article may include a film, a sheet, a bottle, a liquid crystal display, a hologram, a filter, a dielectric film, an insulating material for an electric wire, an insulating tape, a fiber-reinforced composite, other injection-molded articles, and the like. In addition, it may be applicable to electric and electronic products such as housings of TVs, computers, audio systems, air conditioners and office automation equipment.

The molded article according to the present invention may be manufactured according to a conventional method known in the art, for example, a mixture including the thermoplastic resin composition, the phosphorus-based flame retardant, other resins or additives, and the like may be subjected to press molding, foam molding, injection molding, extrusion molding, and punching molding to obtain the molded article. In such a case, the mixture may be obtained in a manner where after appropriately mixing the thermoplastic resin composition, the phosphorus-based flame retardant, other resins or additives, and the like, the mixture may be melt-kneaded using Banbury mixer, kneader, uniaxial or double-axial extruder and the like.

In a specific example, the molded article may be a film.

The film may be manufactured by a conventional method known in the art, such as inflation molding, extrusion molding such as melt extrusion molding, and a solution casting method. The manufactured film may be a single-layer film made of the thermoplastic resin composition, or a single-layer or multi-layer film including different materials.

In another specific example, the molded article may be a fiber.

The fiber may be manufactured by conventional methods known in the art, such as melt spinning, solution spinning, and the like. The manufactured fiber may be in the form of being made of the thermoplastic resin composition or mixed with a heterogeneous resin.

The thermoplastic resin composition and the molded article according to the present invention described above not only have excellent flame retardancy but also have improved physical stability and enhanced mechanical properties of a final thermoplastic resin due to the phosphorus (P)-based flame retardant, even if an amount used is reduced compared to conventional flame retardants, and thus they may be usefully applicable in the manufacture of molded articles such as housings and connectors for electronic/electrical and automobile parts. However, it is not limited to the above-described usage, and it is applicable to various technical fields and processes to which the polyester resin, the polyamide resin, and the like are conventionally applied.

Hereinafter, the present invention will be described in detail through examples. However, the following examples are only provided to illustrate the present invention, and the present invention is not limited by the following examples.

### Synthesis Examples 1 to 9: Preparation of phosphorus-based flame retardant additive

### Synthesis Example 1

After adding 100 g of 2-hydroxy-1,3-dimethyl-1,3,2-bisazaphosphine oxide, 162.7 g of diethyl phosphinic acid, and 320 g of aluminum sulfate to a reactor, 7,000 ml of water was further added thereto, and then a temperature was raised to 110°C, followed by stirring for 12 hours. When the reaction was completed, the temperature was lowered to room temperature, and a white solid was filtered and washed with 3,000 ml of water and 3,000 ml of ethanol. The washed white solid was vacuum-dried at 120°C for 24 hours to prepare a phosphorus-based flame retardant additive 1 (yield: 87 %) represented by the following Chemical Formula 5a. 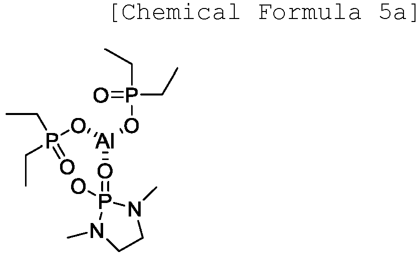 MS: [M+H]+ = 419.1

### Synthesis Example 2

A phosphorus-based flame retardant additive 2 (yield: 92 %) represented by the following Chemical Formula 5b was prepared in the same manner as in Synthesis Example 1, except that 100 g of 2-carboxyethylphenyl phosphinic acid instead of 2-hydroxy-1,3-dimethyl-1,3,2-bisazaphosphine oxide, 57 g of diethyl phosphinic acid, and 134.5 g of aluminum sulfate were used. 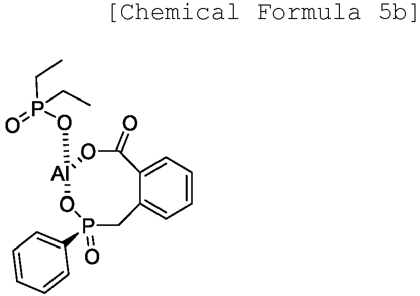 MS: [M+H]+ = 423.1

### Synthesis Example 3

A phosphorus-based flame retardant additive 3 (yield: 78 %) represented by the following Chemical Formula 5c was prepared in the same manner as in Synthesis Example 1, except that 125.3 g of dimethyl phosphinic acid instead of 2-hydroxy-1,3-dimethyl-1,3,2-bisazaphosphine oxide and 192 g of aluminum sulfate were used. 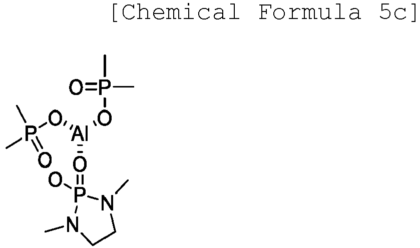 MS: [M+H]+ = 363.1

### Synthesis Example 4

A phosphorus-based flame retardant additive 4 (yield: 87 %) represented by the following Chemical Formula 5d was prepared in the same manner as in Synthesis Example 1, except that 100 g of 2-carboxyethylphenyl phosphinic acid, 44 g of dimethyl phosphinic acid and 134.5 g of aluminum sulfate were used. 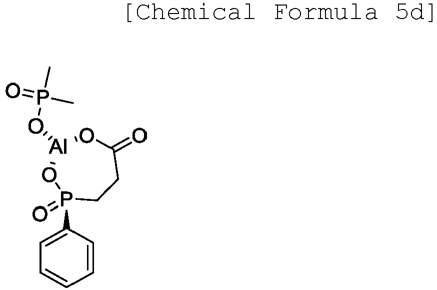 MS: [M+H]+ = 333.0

### Synthesis Example 5

A phosphorus-based flame retardant additive 5 (yield: 79 %) represented by the following Chemical Formula 5e was prepared in the same manner as in Synthesis Example 1, except that 100 g of 1,3-diethyl-2-hydroxy-1,3,2-diaza phosphine oxide, 245 g of diphenyl phosphinic acid and 161.6 g of aluminum sulfate were used. 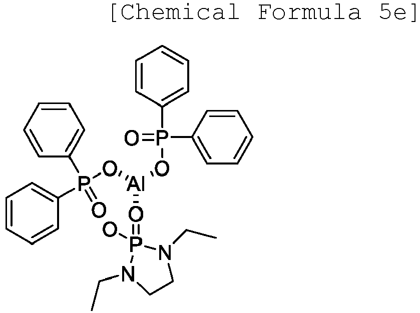 MS: [M+H]+ = 639.1

### Synthesis Example 6

A phosphorus-based flame retardant additive 6 (yield: 82 %) represented by the following Chemical Formula 5f was prepared in the same manner as in Synthesis Example 1, except that 100 g of 2-carboxyethylphenyl phosphinic acid, 228 g of diethyl phosphinic acid and 160 g of aluminum sulfate were used. 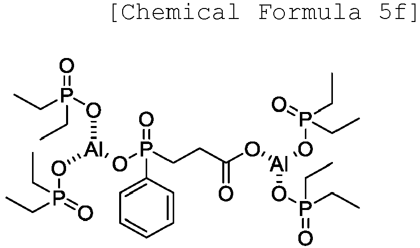 MS: [M+H]+ = 750.2

### Synthesis Example 7

A phosphorus-based flame retardant additive 7 (yield: 75 %) represented by the following Chemical Formula 5g was prepared in the same manner as in Synthesis Example 1, except that 100 g of phosphonoacetic acid, 261.2 g of diethyl phosphinic acid and 243.9 g of aluminum sulfate were used. 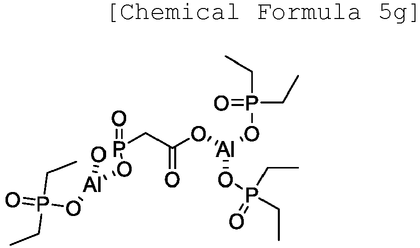 MS: [M+H]+ = 555.1

### Synthesis Example 8

After adding 100 g of 2-hydroxy-1,3-dimethyl-1,3,2-bisazaphosphine oxide, 81.37 g of diethyl phosphinic acid, and 107.6g of zinc sulfate to a reactor, 2,000 ml of water was further added thereto, and then a temperature was raised to 110°C, followed by stirring for 12 hours. When the reaction was completed, the temperature was lowered to room temperature, and a white solid was filtered and washed with 3,000 ml of water and 3,000 ml of ethanol. The washed white solid was vacuum-dried at 120°C for 24 hours to prepare a phosphorus-based flame retardant additive 8 (yield: 71 %) represented by the following Chemical Formula 5h. 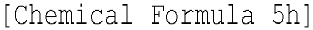 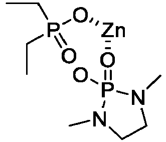 MS: [M+H]+ = 335.0

### Synthesis Example 9

A phosphorus-based flame retardant additive 9 (yield: 73 %) represented by the following Chemical Formula 5i was prepared in the same manner as in Synthesis Example 1, except that 100 g of 2-carboxyethylphenyl phosphinic acid, 114 g of diethyl phosphinic acid and 150.8 g of zinc sulfate were used. 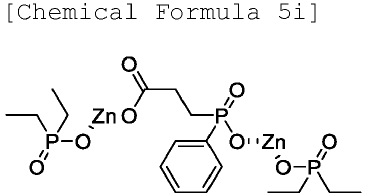 MS: [M+H]+ = 585.0

### Examples 1 to 8

Specific details (composition) of components used in Examples 1 to 8 are shown in Table 1 below. According to the composition of Table 2 below, the thermoplastic resin and the phosphorus-based flame retardant were mixed with a mixer for 5 to 20 minutes, then added to an extruder, and melted and extruded under conditions of a cylinder temperature of 240°C and a stirring speed of 200 rpm to prepare pellets. The prepared pellets were dried at 90°C for one day, and then injected at 240°C to prepare a specimen for measuring physical properties.

**[Table 1]**

| | | Detailed configuration |
|---|---|---|
| Thermoplastic resin (A) | Polybutylene terephthalate (PBT) | Intrinsic Viscosity (IV) : 0.8~1.2 dl/g |
| Additive (B) | B-1 | Phosphorus-based flame retardant 1 (Synthesis Ex. 1) |
| | B-2 | Phosphorus-based flame retardant 2 (Synthesis Ex. 2) |
| | B-3 | Phosphorus-based flame retardant 3 (Synthesis Ex. 3) |
| | B-4 | Phosphorus-based flame retardant 4 (Synthesis Ex. 4) |
| | B-5 | Phosphorus-based flame retardant 5 (Synthesis Ex. 5) |
| | B-6 | Phosphorus-based flame retardant 6 (Synthesis Ex. 6) |
| | B-7 | Phosphorus-based flame retardant 7 (Synthesis Ex. 7) |
| | C | Metal phosphinate (manufacturer: Clariant, Exolit OP1240) |

### Comparative Example 1

A specimen for measuring physical properties of Comparative Example 1 was prepared in the same manner as in Example 1, except that metal phosphinate (manufacturer: Clariant, Exolit OP1240) was used instead of the phosphorus-based flame retardant prepared in Synthesis Examples 1 to 7.

### Experimental example: evaluation of physical properties

The physical properties of the specimens prepared in Examples 1 to 8 and Comparative Example 1 were evaluated as follows, and the results are shown in Table 2 below.

Method for evaluating physical properties
(1) Flame retardancy ratings: flame retardancy was measured according to the UL94 V test method. In this case, a specimen having a thickness of 0.8 mm was used.
(2) Tensile strength: measured according to the evaluation method specified in ASTM D638.
(3) Impact strength: measured according to the evaluation method specified in ASTM D256.

**[Table 2]**

| | | | Examples (parts by weight) | | | | | | | | Comp. Ex. 1 |
|---|---|---|---|---|---|---|---|---|---|---|---|
| | | | 1 | 2 | 3 | 4 | 5 | 6 | 7 | 8 | |
| Composition (wt%) | Thermoplastic resin (A) | PBT | 80 | 80 | 80 | 80 | 80 | 85 | 80 | 80 | 80 |
| | Additive (B) | B-1 | 20 | - | - | - | - | - | - | - | - |
| | | B-1 | - | 20 | - | - | - | 15 | - | - | - |
| | | B-1 | - | - | 20 | - | - | - | - | - | - |
| | | B-1 | - | - | - | 20 | - | - | - | - | - |
| | | B-1 | - | - | - | - | 20 | - | - | - | - |
| | | B-1 | | | | | | | 20 | - | |
| | | B-1 | | | | | | | - | 20 | |
| | | C | - | - | - | - | - | - | - | - | 20 |
| Physical properties | Flame retardancy evaluation | | V-0 | V-0 | V-0 | V-0 | V-0 | V-0 | V-0 | V-0 | V-0 |
| | Tensile strength (kgf/cm²) | | 470 | 454 | 458 | 436 | 450 | 455 | 453 | 457 | 401 |
| | Impact strength (kgf·cm/cm) | | 2.4 | 2.5 | 2.4 | 2.3 | 2.4 | 2.5 | 2.5 | 2.5 | 2.0 |

As shown in Table 2, it was appreciated that the thermoplastic resin compositions of Examples 1 to 8 including the phosphorus-based flame retardant according to the present disclosure exhibited a flame retardancy equal to or greater than that of Comparative Example 1 not including the phosphorus-based flame retardant, and also had significantly improved mechanical properties such as tensile strength and impact strength. In particular, despite including a small amount of the phosphorus-based flame retardant as compared to Comparative Example 1, the thermoplastic resin composition of Example 6 exhibited comparable flame retardancy, as well as a tensile strength improved by about 50 kgf/cm² or more and an impact strength improved by about 0.5 kgf·cm/cm or more.

## Claims

1. A phosphorus-based flame retardant represented by the following Chemical Formula 1: 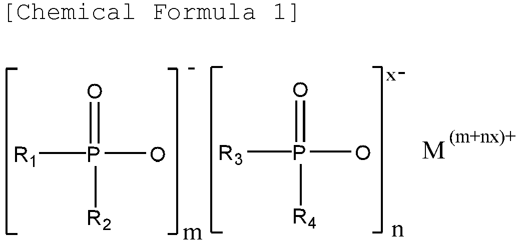 wherein in the above Chemical Formula,
R₁ to R₃ are the same as or different from each other, and are each independently selected from hydrogen, a hydroxyl group, a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₄ is selected from a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms, each of which comprises at least one substituent capable of forming coordination bonding with the following M,
M is a metal selected from Group 1, Group 2, Group 3 and transition metals, or a protonated nitrogen base,
m, n and x are each an integer in a range from 1 to 5, and
wherein the C₁ to C₄₀ alkyl group, the C₂ to C₄₀ alkenyl group, the C₃ to C₄₀ cycloalkyl group, the heterocycloalkyl group having 3 to 40 nuclear atoms, the C₆ to C₆₀ aryl group and the heteroaryl group having 5 to 60 nuclear atoms of R₁ to R₄ are each independently unsubstituted or substituted with one or more substituents selected from deuterium (D), halogen, a cyano group, a nitro group, a hydroxyl group, an amine group, a carboxyl group, a C₁ to C₄₀ alkyl group, a C₆ to C₆₀ aryl group, and a heteroaryl group having 5 to 60 nuclear atoms, and when the substituents are plural in number, the substituents are the same as or different from each other.

2. The phosphorus-based flame retardant of claim 1, wherein the substituent capable of forming coordination bonding with M is one or more selected from a hydroxyl group, a carboxyl group and an amine group.

3. The phosphorus-based flame retardant of claim 1, wherein the phosphorus-based flame retardant is represented by any one of Chemical Formulas 1a to 1f: 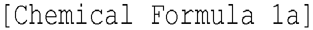 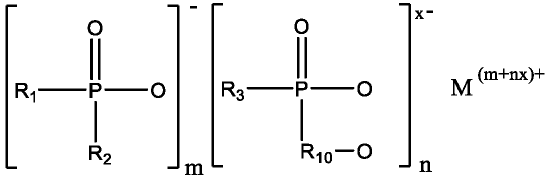 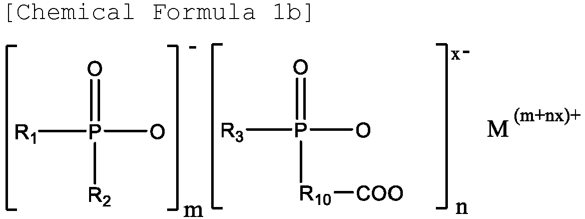 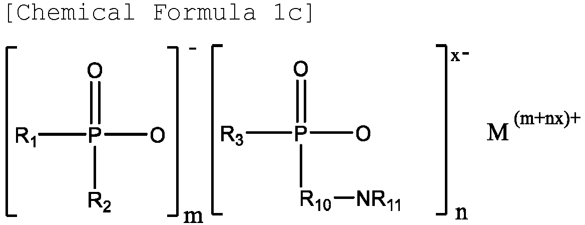 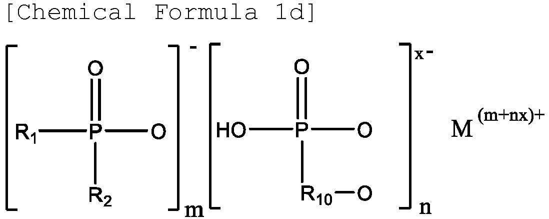 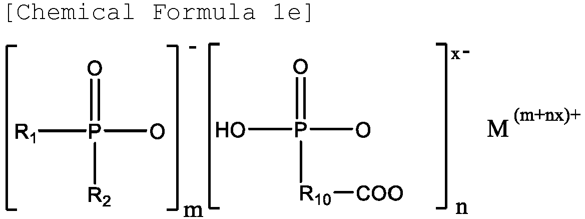 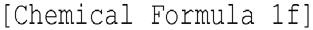 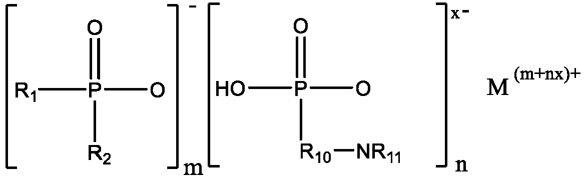 wherein in Chemical Formulas 1a to 1f,
R₁₀ is one or more selected from a C₁ to C₄₀ alkyl group and a C₆ to C₆₀ aryl group,
R₁₁ is one or more selected from hydrogen, a C₁ to C₄₀ alkyl group, and a C₆ to C₆₀ aryl group, and
R₁, R₂, R₃, M, m, n, and x are the same as defined in claim 1.

4. The phosphorus-based flame retardant of claim 1, wherein the phosphorus-based flame retardant represented by Chemical Formula 1 comprises one or more selected from compounds represented by the following Chemical Formulas:

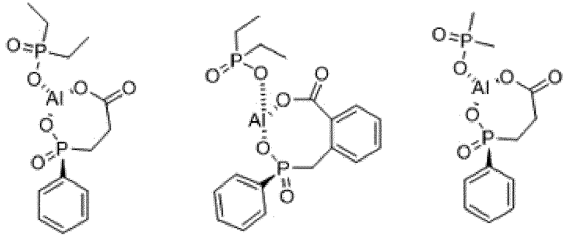

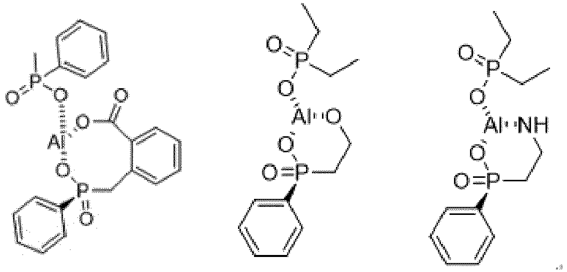

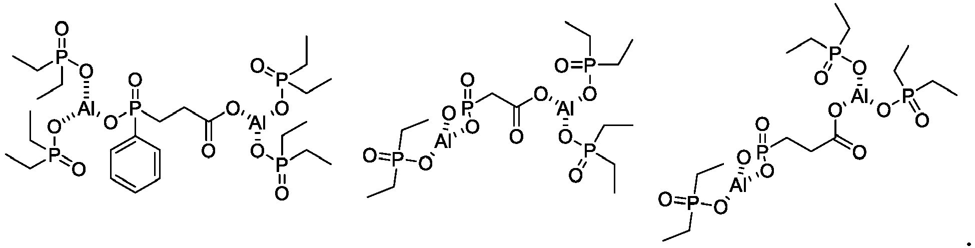

5. A phosphorus-based flame retardant represented by the following Chemical Formula 2: 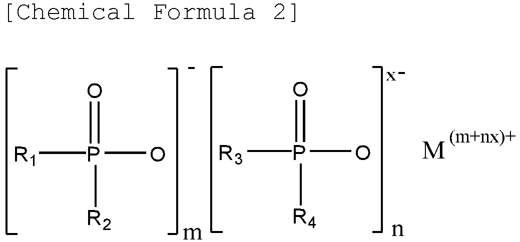 wherein in the above Chemical Formula,
R₁ to R₃ are the same as or different from each other, and are each independently selected from hydrogen, a hydroxyl group, a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₄ is selected from a C₁ to C₄₀ alkyl group, a C₂ to C₄₀ alkenyl group, a C₃ to C₄₀ cycloalkyl group, a heterocycloalkyl group having 3 to 40 nuclear atoms, a C₆ to C₆₀ aryl group, and a heteroaryl group having 5 to 60 nuclear atoms,
R₃ and R₄ are bonded with each other to form a monocyclic or polycyclic condensed ring,
M is a metal selected from Group 1, Group 2, Group 3 and transition metals, or a protonated nitrogen base,
m, n and x are each an integer in a range from 1 to 5, and
the C₁ to C₄₀ alkyl group, the C₂ to C₄₀ alkenyl group, the C₃ to C₄₀ cycloalkyl group, the heterocycloalkyl group having 3 to 40 nuclear atoms, the C₆ to C₆₀ aryl group and the heteroaryl group having 5 to 60 nuclear atoms of R₁ to R₄ are each independently unsubstituted or substituted with one or more substituents selected from deuterium (D), halogen, a cyano group, a nitro group, a hydroxyl group, an amine group, a carboxyl group, a C₁ to C₄₀ alkyl group, a C₆ to C₆₀ aryl group, and a heteroaryl group having 5 to 60 nuclear atoms, and when the substituents are plural in number, the substituents are the same as or different from each other.

6. The phosphorus-based flame retardant of claim 5, wherein the phosphorus-based flame retardant represented by Chemical Formula 2 is represented by the following Chemical Formula 2a or 2b: 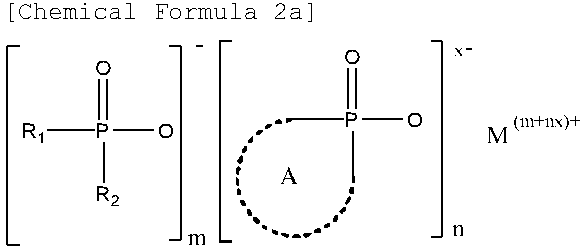 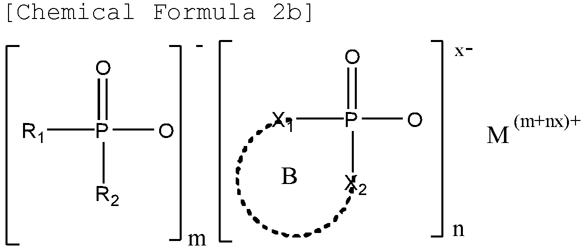 wherein in Chemical Formula 2a or 2b,
ring A and ring B are each independently a monocyclic or polycyclic heteroalicyclic or a monocyclic or polycyclic heteroaromatic ring,
X₁ and X₂ are the same as or different from each other, and are each independently CR₂₁R₂₂ or NR₂₃, at least one of X₁ and X₂ being N,
R₂₁ to R₂₃ are the same as or different from each other, and are each independently selected from hydrogen, a C₁ to C₄₀ alkyl group, and a C₆ to C₆₀ aryl group,
ring A, ring B, the C₁ to C₄₀ alkyl group and the C₆ to C₆₀ aryl group of R₂₁ to R₂₃ are each independently unsubstituted or substituted with one or more substituents selected from deuterium (D), halogen, a cyano group, a nitro group, a C₁ to C₄₀ alkyl group, a C₆ to C₆₀ aryl group, and a heteroaryl group having 5 to 60 nuclear atoms, and
R₁, R₂, M, m, n, and x are the same as defined in claim 5.

7. The phosphorus-based flame retardant of claim 5, wherein the phosphorus-based flame retardant represented by Chemical Formula 2 comprises one or more selected from compounds represented by the following Chemical Formulas:

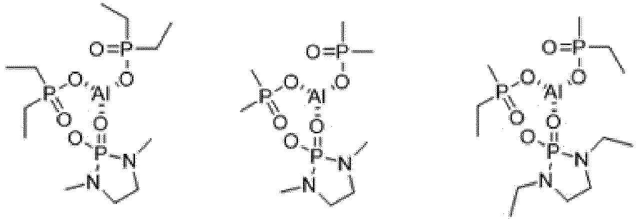

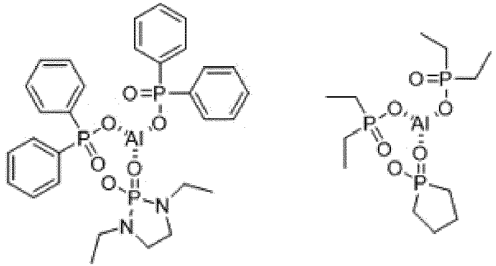

8. The phosphorus-based flame retardant of claim 1 or 5, wherein M is selected from Al, Mg, Ca, Sb, Sn, Ge, Ti, Zn, Fe, Ni, Zr, Ce, Bi, Sr, Mn, Li, Na, and K, or is an ammonium ion.

9. A thermoplastic resin composition comprising:
a thermoplastic resin; and
one or more phosphorus-based flame retardants selected from the phosphorus-based flame retardant represented by Chemical Formula 1 according to claim 1, and the phosphorus-based flame retardant represented by Chemical Formula 2 according to claim 5.

10. The thermoplastic resin composition of claim 9, wherein the phosphorus-based flame retardant is included in an amount in a range from 0.1 to 50 parts by weight with respect to 100 parts by weight of the thermoplastic resin composition.

11. The thermoplastic resin composition of claim 9, wherein the thermoplastic resin composition comprises at least one of a polyester resin or a polyamide resin.

12. The thermoplastic resin composition of claim 9, wherein the thermoplastic resin is polybutylene terephthalate (PBT).

13. A molded article formed from the thermoplastic resin composition according to claim 9.

14. The molded article of claim 13, wherein the molded article is a film or a fiber.
